# EUROPEAN PATENT SPECIFICATION

(11) **EP 2 686 592 B1**
(45) Date of publication and mention of the grant of the patent: **14.01.2015**
(21) Application number: 11722923.7
(22) Date of filing: 14.03.2011
(51) Int. Cl.: F16K 17/38

(54) **RELIEF DEVICE, IN PARTICULAR FOR GAS SYSTEMS**
ENTLASTUNGSVORRICHTUNG, INSBESONDERE FÜR GASSYSTEME
DISPOSITIF DE SÛRETÉ, EN PARTICULIER POUR SYSTÈMES DE GAZ

(43) Date of publication of application: 22.01.2014
(73) Proprietor: Emer S.p.a., 25135 Brescia (IT)
(72) Inventor: DEFILIPPI, Roberto, I-10155 Torino (IT); DALLERA, Gordan, I-25080 Mazzano Brescia (IT)
(74) Representative: Chimini, Francesco
(86) International application number: PCT/IT2011/000070
(87) International publication number: WO 2012/123974

(56) References cited:
- EP-A1- 1 418 372
- EP-A1- 1 521 022
- WO-A1-2009/010177
- LU-A1- 91 282
- US-A- 5 632 297
- US-A1- 2001 018 929

## Description

### Field of the invention

The present invention relates in general to self-propulsion gas systems using compressed natural gas, liquefied petroleum gas or other gaseous combustible contained under pressure in a cylinder or container, and relates in particular to an innovative relief device for such systems.

### State of the art

In motor vehicles with engines which can be gas fuelled, the gaseous fuel is loaded and compressed in at least one cylinder or container. Pursuant to some safety regulations of the trade considered here, each gas cylinder on board a vehicle must be fitted with relief devices to prevent explosion in the event of anomalous increases in internal pressure and/or the presence of fire and in any case of an increase in temperature beyond a predefined threshold.

To such purpose, relief units against excessive temperature increases leading to increases in the internal pressure of the cylinder have already been proposed and are used in association with cylinders of compressed gas.

The prior thermic relief devices are positioned along a release duct of the gas from the cylinder to close said duct in normal operating conditions and comprise a heat-sensitive element confined in a respective seat or chamber in a solid body in association with an expulsion piston. The heat-sensitive element normally keeps the release duct closed and only changes its state when a predefined safety temperature threshold is reached, at such point opening the release duct to empty the cylinder. In some embodiments the heat-sensitive element is a solid state alloy, melting at the predefined safety temperature and is expelled at least partially outwards through an expulsion hole by the piston associated with.it so as to open the release duct. In other embodiments, the heat-sensitive element may be in a paste or liquid form and contained in a casing destined to rupture when a predefined temperature is reached. WO A 2009/010177 discloses a device according to the preamble of claim 1.

It is clear that said relief devices must be extremely sensitive and reliable for correct, prompt intervention when struck by an anomalous increase in temperature. However, sensitivity and reliability decrease as the quantity of the heat-sensitive element increases and as the thermic insulation between the heat source and the heat-sensitive element increases. Thermic insulation depends on the quantity of material present between the heat-sensitive element and the heat source, that is the environment external to the device. In the more recent prior devices the quantity of fusible alloy is about 9 grams in weight and is confined inside the relief device body, thereby being separated from the outside environment by the metallic body of such device.

The need is therefore widely felt to reduce the time needed for the area which the fusible alloy is located in to reach the predefined temperature and the time needed for the alloy to fuse, so as to increase the sensitivity and reliability of the relief device.

### Purpose of the invention

The purpose of the present invention is to propose a thermic relief device for the aforementioned use the inactive condition of which, closing the release duct of the cylinder, is maintained by a mechanical retaining system as happens in the prior devices.

Another purpose of the invention is to provide a thermic relief device for gas cylinders and the like with increased sensitivity and reliability compared to prior devices.

Such purposes are achieved by a relief device for a pressurised gas tank, particularly for self-propulsion gas cylinders, comprising a device body defining an inner chamber for fluidic communication with said gas tank through an entry duct and with the atmosphere through at least one exit hole. A shut-off device is housed at least partially in said inner chamber and is movable between a closed position, in which it prevents the flow of gas from the entry duct to the exit hole, and an open position, in which it permits the flow of gas from the entry duct to the exit hole. Retaining means movable between an active position blocking the shut-off device in the closed position, and an inactive position releasing said shut-off device for its movement to the open position, are associated with said shut-off device. At least one solid, heat-sensitive element interacts with said retaining means to keep them normally in said active blocking position and is suitable to melt at a predefined temperature to enable the shifting of the retaining means into said inactive release position.

The heat-sensitive element is housed in a respective seat made in the stem of a retaining screw screwed into a threaded hole made in a wall of the device body defining the inner chamber, the heat-sensitive element being housed completely within the wall of the device body itself.

Thanks to one such embodiment, the distance and the material interposed between the outside environment and the heat-sensitive element can be significantly reduced.

In fact, the latter is not, as in the prior devices, completely enclosed in the device body and therefore separated from the outside environment by the walls of said body, which are of a certain thickness. For example, the thickness of the walls of the stem of the screw defining the seat of the heat-sensitive element is such as to maintain the heat-sensitive element at a distance of 0.5 to 2 mm from the outside environment. Consequently, the time needed for the heat-sensitive element to reach the predefined trip temperature is considerably reduced.

In a preferred embodiment, the device body and the inner chamber extend mainly along a longitudinal axis, and the shut-off device is a piston obturator axially movable along said longitudinal axis between a forward closed position and a rearward open position of the release duct.

Advantageously, the retaining devices are movable radially in said axial direction and, in a preferred embodiment, comprise a retaining ball suitable to engage in a recess made in the shut-off device. Consequently, the heat-sensitive element is sized so as to permit a radial shift of the retaining ball from the engaged position in the recess of the obturator to a disengaged position from such recess. Consequently, the heat-sensitive element may be made of very small dimensions, for example in the shape of a disc with a diameter roughly equal to that of the retaining ball and a thickness roughly equal to the depth of the recess, that is substantially equal to the radius of the retaining ball. It has been demonstrated that a high level of reliability in the functioning of the relief device can even be obtained with a heat-sensitive element having a weight of just 0.01 - 1 gram. With such a meagre quantity of material the time needed for the alloy to fuse is considerably inferior to the trip times of the prior devices.

Preferably, the retaining ball is normally kept in the active engaged position in the recess by a spacer housed in the seat of the stem of the retaining screw and resting on the heat-sensitive element. Such spacer therefore interposes between the spherical surface of the retaining ball and the flat surface of the heat-sensitive element, thus forming a compact and stable assembly which ensures correct functioning of the retaining devices.

In one advantageous embodiment, at least one expulsion hole is made in the stem of the retaining screw which places the seat for the heat- sensitive element in communication with the outside to enable said heat-sensitive element in the molten state to be at least partially expelled outside the device body, causing the release of the shut-off device.

In other words, an exclusive expulsion hole is provided for the molten alloy, in direct contact with the outside environment, so as to accelerate its exit. Thanks to such expedient, the gas is prevented from cooling the molten alloy while it comes out the exit holes once the release duct is opened, causing re-solidification which could block said holes. The reliability of the relief device is thereby improved.

In one advantageous embodiment, the piston obturator comprises a head portion which engages the entry duct so as to seal it, a tail portion which engages the inner chamber so as to slide, and an intermediate portion having a transversal section smaller than that of the tail portion. The at least one exit hole is made in the wall of the device body surrounding said intermediate portion of the obturator. In other terms, between the intermediate portion and the wall of the inner chamber a cavity is defined which, when the obturator is in the rearward open position of the entry duct, permits the gas to flow out of said entry duct to the exit holes instantaneously.

### Brief description of the drawings

Further characteristics and advantages of the relief device according to the invention will be more clearly comprehensible from the following description of one of its embodiments, made by way of a non-limiting example. In such description reference will be made to the attached drawings, wherein:

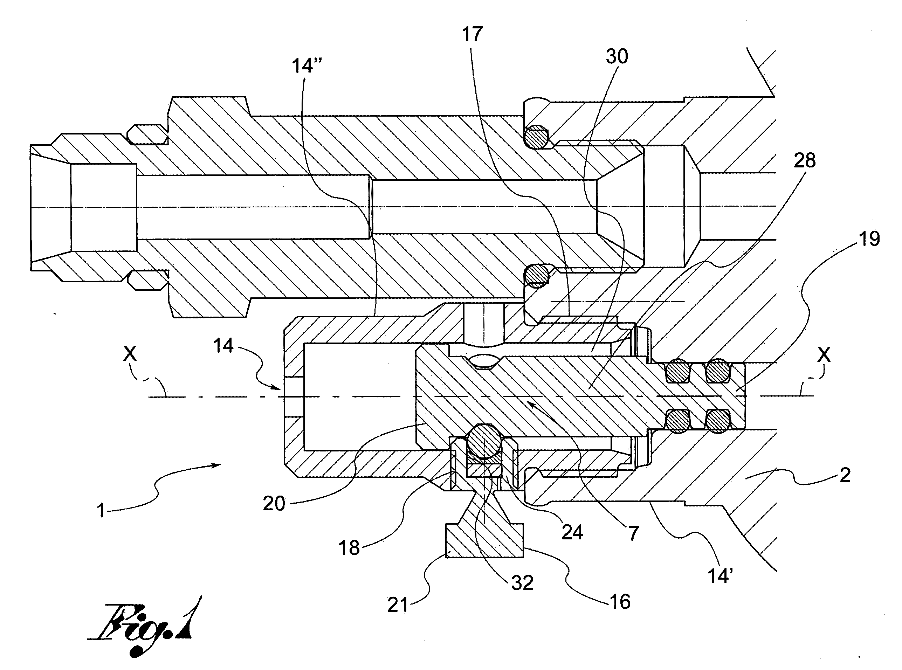

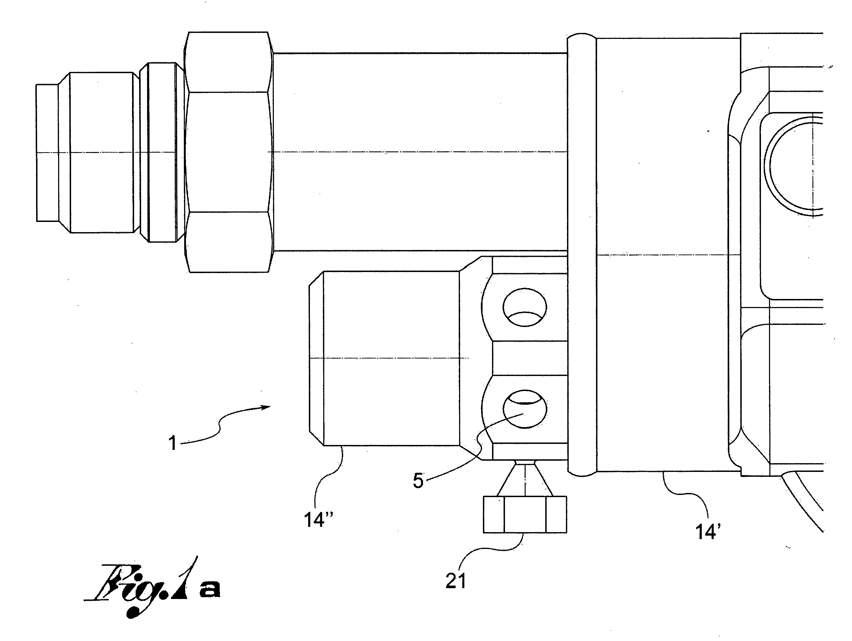

Figure 1 shows an axial section of the relief device applied to a valve, before breaking of the retaining screw and with the piston obturator in the forward, closed position of the gas release duct;
Figure 1a shows the device in figure 1, seen from the side;

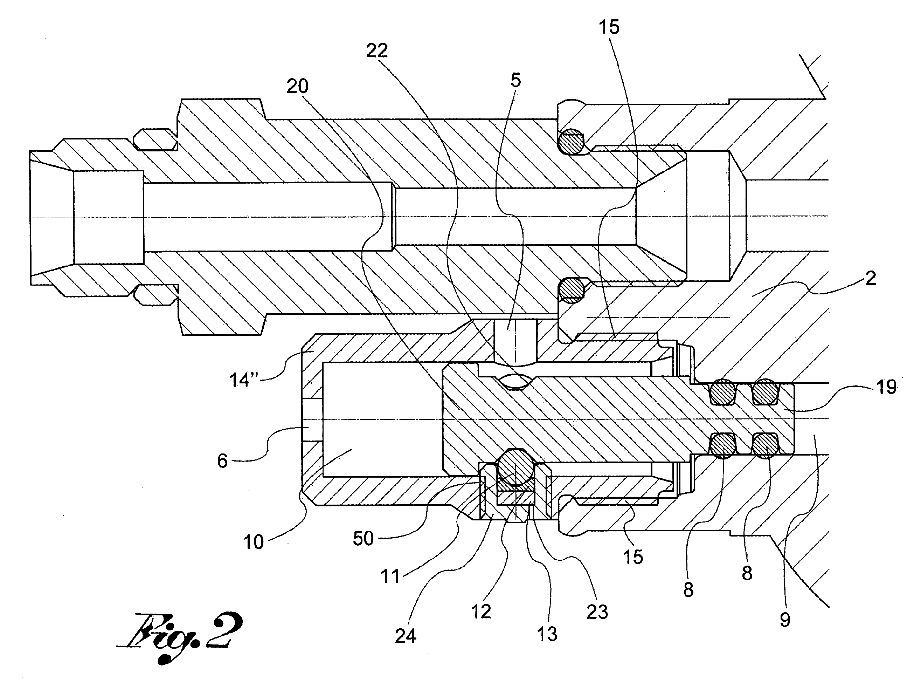

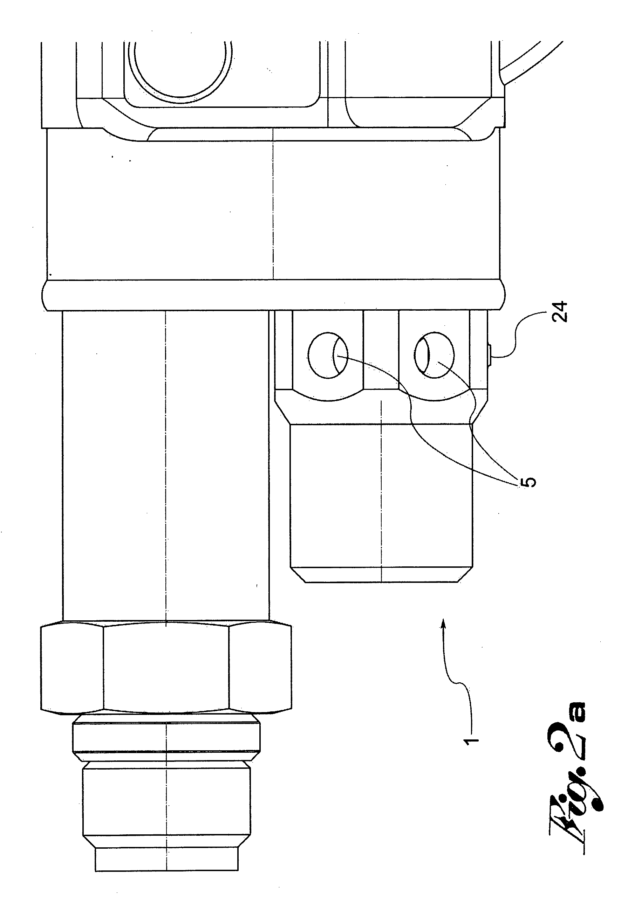

Figure 2 shows an axial section of the relief device, after breaking of the retaining screw and with the piston obturator in the forward, closed position of the gas release duct;
Figure 2a is a view from the side of the device after breakage of the retaining screw; and

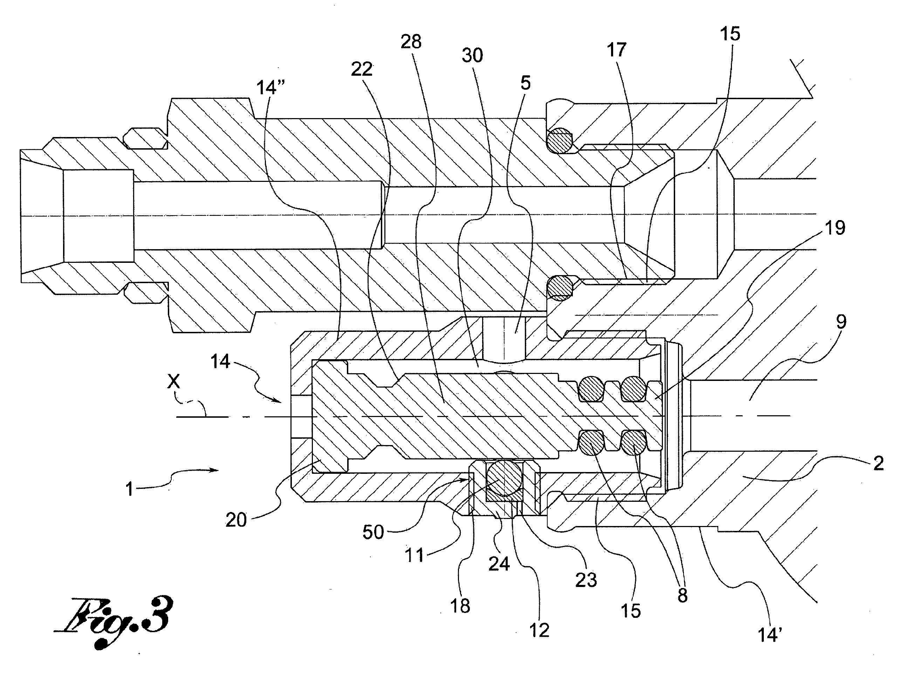

Figure 3 is an axial section of the relief device, with the piston obturator in the rearward, open position of the gas release duct.

### Detailed description of the invention

In said drawings reference numeral 1 globally denotes a relief device for a pressurised gas cylinder for self-propulsion. The relief device 1 comprises a device body 14 which defines an inner chamber 10. Said inner chamber 10 is in fluidic communication with said gas cylinder through an entry duct 9 and with the atmosphere through at least one exit hole 5. Consequently, the entry duct 9, the inner chamber 10 and the at least one exit hole 5 form, when placed in fluidic communication with each other, a release duct into the atmosphere of the gas contained in the cylinder.

In one embodiment, the device body 14 comprises a first portion 14' made in the body of a valve 2 of the gas cylinder, and a second portion 14" detachably connected to said first portion 14'. The two portions of the device body 14 jointly define the inner chamber 10. For example, the second portion 14" of the device body 14 has a threaded connection portion 15 which screws into a threaded seat 17 made in the valve body 2 and which the entry duct 9 opens into.

The relief device 1 extends mainly along a longitudinal axis X. Preferably, the inner chamber 10 and the entry duct 9 are coaxial to said longitudinal axis X.

A piston obturator 7 is housed in the inner chamber 10. Said piston obturator 7 is movable between a forward, closed position in which it prevents the transit of gas from the entry duct 9 to the exit hole 5, and a rearward, open position in which it permits such transit of gas. In one embodiment, the piston obturator 7 has a head portion 19 which, when the obturator is in the forward position, engages the entry duct 9 so as to seal it. For example, said head portion 19 is fitted with at least one annular sealing gasket 8. The head portion 19 of the obturator 7 is therefore sized to be housed in and engage so as to seal, the entry duct 9, thanks to the relative gasket 8.

The piston obturator 7 further comprises a tail portion 20, which engages the inner chamber 10 so as to slide, and an intermediate portion 28 between said head portion 19 and said tail portion 20. The latter is therefore guided during the sliding of the piston obturator by the inner walls of the device body 14. The intermediate portion 28 has a smaller transversal section than the tail portion 20, so as to define a cavity 30 with the inner wall of the inner chamber 10. Moreover, in said intermediate portion 28 an annular recess 22 is made.

In the example shown, in the wall of the second portion of body 14" surrounding the intermediate portion 28 of the piston obturator 20, a crown of exit holes 5 is made. Said exit holes 5 are therefore arranged radially, that is are on an axis orthogonal to the longitudinal axis X of the device.

Advantageously, one of said radial holes, marked 50, has an inner threaded portion 18 for a threaded coupling with retaining/release means of the piston obturator which will be described below.

Such retaining/release means of the piston obturator 7 comprise a retaining ball 11, a spacer 12, an element in eutectic material 13 and a retaining screw 16. The retaining ball 11 is suitable to normally engage the annular recess 22 made in the intermediate portion 28 of the piston obturator 7, so as to prevent a translation of the obturator from the forward, closed position to the rearward, open position. The retaining ball 11 is kept in its active stop position of the obturator by the spacer 12, which in turn is supported by the eutectic element 13, for example in the shape of a disc having a very small diameter and thickness. In the example shown, the element in eutectic material weighs about 0.05 grams.

The element in eutectic material 13 is a solid, heat-sensitive element which melts when it reaches a predefined temperature. The spacer is movable in a radial direction between a forward position which keeps the retaining ball engaged in the annular recess 22 and a rearward position which permits disengagement of the retaining ball from said annular recess 22. The spacer 12 is normally kept in the forward position by the heat-sensitive element 13 in its solid state.

The spacer 12 and the heat-sensitive element 13 are sized for housing in a cylindrical seat 32 made in the stem 24 of the retaining screw 16, screwed into the threaded hole 50. Said cylindrical seat 32 is open towards the piston obturator 7, and in particular faces the annular recess 22. The heat-sensitive element 13 is therefore squeezed between the spacer 12, the side wall and the end of said cylindrical seat 32, at least while it remains in a solid state.

It should be noted that the open distal end of the threaded stem 24 skims the outer surface of the piston obturator 7 and acts as a guide for the positioning of the retaining ball 11.

The forward position of the piston obturator 7 is therefore defined by the action of the retaining ball 11 in the annular recess 22. In this position, the retaining ball 11 is pushed radially into the annular recess 22 by the spacer 12 mounted at origin and kept in the forward position by the heat-sensitive element 13 while it remains in a solid state.

When however, for any reason, the temperature in the area of the relief device increases beyond a predefined threshold, the heat-sensitive element 13 melts; the spacer 12 is no longer supported by the disc of heat-sensitive material and can move radially towards the bottom of the cylindrical seat 32, permitting disengagement of the retaining ball 11 from the annular recess 22. In fact the retaining ball can move radially outwards so as to escape from the annular recess 22 and thereby release the piston obturator 7; the latter, under the thrust of the pressure of the gas in the cylinder, moves backwards opening the entry duct 9 for the release of the gas through the exit holes 5.

It should be noted that the portion of the inner chamber 10 defined by the front of the tail portion 20 of the piston obturator is placed in fluidic communication with the outside through a vent hole 6, so as to ensure that said portion of inner chamber is always at atmospheric pressure and therefore does not oppose the thrust generated in the opposite direction by the gas.

Advantageously, at least one expulsion hole 23 is made in the stem 24 of the retaining screw 16 which places the cylindrical seat 32 in communication with the outside to enable the heat-sensitive element 13 in the molten state to be at least partially expelled outside the device body, causing the rearward movement of the retaining ball 11 and thereby the release of the piston obturator 7.

Alternatively or in addition, the spacer 12 is housed in the cylindrical seat 32 with play, so as to leave an expulsion passage for the at least partial exit of the heat-sensitive element 13 in the molten state from the stem of the screw, causing in this case again the rearward movement of the retaining ball 11 and thereby the release of the piston obturator 7.

The retaining screw 16 further comprises a screwing head 21 the function of which is to enable the screwing of the threaded stem 24 into the threaded hole 30. Said head 21 is connected to the stem 24 by means of a connection portion 34 of reduced thickness, so as to be easily detachable from the stem once the screw has been screwed in. The screw-less stem does not protrude from the threaded hole it is screwed into. The removal of the screw head 21 prevents the unscrewing or accidental loosening of the screw which would entail disassembly of the retaining system and the release of the piston with consequent undesirable gas leaks. Such removal, as well as ensuring the integrity and reliability of the device, reduces the space occupied, preventing the head of the screw from interfering with other parts of the gas system during the assembly of the device in said system, increasing the safety of the operators responsible for assembling/servicing the system inasmuch as preventing impact against a surface with sharp edges.

## Claims

1. Relief device (1) for a pressurised gas tank, in particular for self-propulsion gas cylinders, comprising:
- a device body (14) which defines an inner chamber (10) for fluidic communication with said gas tank through an entry duct (9) and with the atmosphere through at least one exit hole (5);
- a shut-off device (7) housed at least partially in said inner chamber (10) and movable between a closed position, in which it prevents the flow of gas from the entry duct (9) to the exit hole (5), and an open position, in which it permits the flow of gas from the entry duct (9) to the exit hole (5);
- retaining means (11) associated with said shut-off device and movable between an active position blocking the shut-off device in the closed position, and an inactive position releasing said shut-off device for its movement to the open position;
- at least one solid heat-sensitive element (13) interacting with said retaining means to keep them normally in said active blocking position and suitable to melt at a predefined temperature to enable the shifting of the retaining means into said inactive release position;
said relief device (1) being **characterized in that** the solid heat-sensitive element (13) is housed in a respective seat (32) made in a stem (24) of a retaining screw (16) screwed into a threaded hole (50) made in a wall of the device body (14) defining the inner chamber (10), the heat-sensitive element (13) being housed completely within said wall of the device body (14) itself.

2. Device according to claim 1, wherein the thickness of the walls of the stem (24) of the screw (16) which defines the seat (32) of the heat-sensitive element (13) is such as to maintain the heat-sensitive element at a distance of 0.5 to 2 mm from the outside environment.

3. Device according to claim 1 or 2, wherein each heat-sensitive element (13) weighs from 0.01 g to 1 g.

4. Device according to any of the previous claims, wherein the inner chamber (10) extends mainly along a longitudinal axis (X) and wherein the shut-off device is a piston obturator (7) axially movable along said longitudinal axis between the closed position and the open position.

5. Device according to claim 4, wherein the retaining means are radially movable with respect to said axial direction.

6. Device according to any of the previous claims, wherein the retaining means comprise a retaining ball (11) suitable to engage in a recess (22) made in the shut-off device.

7. Device according to claim 6, wherein said retaining ball (11) is normally kept in the active engaged position in the recess (22) by a spacer (12) housed in the seat (32) of the stem (24) of the retaining screw (16) and resting on the heat-sensitive element (13).

8. Device according to any of the previous claims, wherein the shut-off device is in brass or steel or aluminium, or a combination of said materials in any percentage.

9. Device according to any of the previous claims, wherein at least one expulsion hole (23) is made in the stem (24) of the retaining screw (16) which places the seat (32) for the heat-sensitive element (13) in communication with the outside to enable said heat-sensitive element in the molten state to be at least partially expelled outside the device body (14), causing the release of the shut-off device.

10. Device according to any of the claims 7-9, wherein the spacer (12) is housed in the seat (32) in the stem (24) of the retaining screw (16) with play, so as to leave an expulsion passage for the at least partial exit of the heat-sensitive element (13) in the molten state from the stem (24) of the screw, causing the release of the shut-off device.

11. Device according to any of the previous claims, wherein at least one exit hole (5) and the entry duct (9) have respective hole axes orthogonal to each other.

12. Device according to any of the previous claims, wherein the axis of the entry duct (9) is coaxial to the longitudinal axis (X) of the inner chamber (10).

13. Device according to any of the claims 4-12, wherein the piston obturator (7) comprises a head portion (19) which engages the entry duct (9) so as to seal it, a tail portion (20) which engages the inner chamber (10) so as to slide, and an intermediate portion (28) having a transversal section smaller than that of the tail portion (20), the at least one exit hole (5) being made in the wall of the device body (14) surrounding said intermediate portion (28) of the obturator.

14. Device according to claim 13, wherein the portion of the inner chamber (10) defined at the front by the tail portion (20) of the piston obturator (7) communicates with the atmosphere through a vent hole (6).

15. Device according to any of the previous claims, wherein the device body (14) comprises a first portion (14') made in the body of a valve for gas cylinders for self-propulsion and a second portion (14") detachably connected to said first portion.

16. Device according to the previous claim, wherein said two portions (14', 14") of the device body (14) jointly define the inner chamber (10).

17. Device according to any of the previous claims, wherein the retaining screw (16) has a screw head (21) connected to the stem (24) by means of a connection portion (34) of reduced thickness, so as to be easily detachable from the stem once the screw has been screwed in, the head-less stem does not protruding from the threaded hole (50) it is screwed into.

## Patentansprüche

1. Entlastungsvorrichtung (1) für einen Druckgastank, insbesondere für Eigenantriebs-Gasflaschen, welche aufweist:
einen Vorrichtungskörper (14), der eine Innenkammer (10) zur Fluidverbindung mit dem Gastank durch eine Eingangsleitung (9) und mit der Atmosphäre durch zumindest ein Ausgangsloch (5) definiert;
- eine Absperrvorrichtung (7), die zumindest teilweise in der Innenkammer (10) aufgenommen ist und beweglich ist zwischen einer geschlossenen Stellung, in der sie die Gasströmung von der Eingangsleitung (9) zum Ausgangsloch (5) verhindert, und einer offenen Stellung, in der sie die Gasströmung von der Eingangsleitung (9) zum Ausgangsloch (5) gestattet;
- Haltemittel (11), die der Absperrvorrichtung zugeordnet sind und beweglich sind zwischen einer aktiven Stellung, die die Absperrvorrichtung in der geschlossenen Stellung blockiert, und einer inaktiven Stellung, die die Absperrvorrichtung für deren Bewegung zur offenen Stellung freigibt;
- zumindest ein massives wärmeempfindliches Element (13), das mit den Haltemitteln zusammenwirkt, um diese normalerweise in der aktiven Blockierstellung zu halten, und das geeignet ist, um bei einer vordefinierten Temperatur zu schmelzen, um eine Verlagerung der Haltemittel in die inaktive Freigabestellung zu ermöglichen;
wobei die Entlastungsvorrichtung (1) **dadurch gekennzeichnet ist, dass** das massive wärmeempfindliche Element (13) in einem entsprechenden Sitz (32) aufgenommen ist, der in einem Schaft (24) einer Halteschraube (16) hergestellt ist, die in ein Gewindeloch (50) geschraubt ist, das in einer die Innenkammer (10) definierenden Wand des Vorrichtungskörpers (14) hergestellt ist, wobei das wärmeempfindliche Element (13) vollständig in der Wand des Vorrichtungskörpers (14) selbst aufgenommen ist.

2. Vorrichtung nach Anspruch 1, wobei die Dicke der Wände des Schafts (24) der Schraube (16), die den Sitz (32) des wärmeempfindlichen Elements (13) definiert, so ist, dass sie das wärmeempfindliche Element mit einem Abstand von 0,5 bis 2mm von der Außenumgebung weg hält.

3. Vorrichtung nach Anspruch 1 oder 2, wobei das wärmeempfindliche Element (13) von 0,01g bis 1g wiegt.

4. Vorrichtung nach einem der vorhergehenden Ansprüche, wobei die Innenkammer (10) sich hauptsächlich entlang einer Längsachse (X) erstreckt, und wobei die Absperrvorrichtung ein Verschlusskolben (7) ist, der entlang der Längsachse zwischen der geschlossenen Stellung und der offenen Stellung axial beweglich ist.

5. Vorrichtung nach Anspruch 4, wobei die Haltemittel in Bezug auf die axiale Richtung radial beweglich sind.

6. Vorrichtung nach einem der vorhergehenden Ansprüche, wobei die Haltemittel eine Haltekugel (11) aufweisen, die zum Eingriff in eine Vertiefung (22) geeignet ist, die in der Absperrvorrichtung hergestellt ist.

7. Vorrichtung nach Anspruch 6, wobei die Haltekugel (11) durch einen Abstandshalter (12), der in dem Sitz (32) des Schafts (24) der Halteschraube (16) aufgenommen ist und auf dem wärmeempfindlichen Element (13) sitzt, normalerweise in der aktiven Eingriffsstellung in der Vertiefung (22) gehalten wird.

8. Vorrichtung nach einem der vorhergehenden Ansprüche, wobei die Absperrvorrichtung in Messing oder Stahl oder Aluminium ist, oder einer Kombination der Materialien im beliebigen Prozentsatz.

9. Vorrichtung nach einem der vorhergehenden Ansprüche, wobei in dem Schaft (24) der Halteschraube (16) zumindest ein Austrittsloch (23) hergestellt ist, das den Sitz (32) für das wärmeempfindliche Element (13) mit der Außenseite in Verbindung setzt, um zu ermöglichen, dass das wärmeempfindliche Element in geschmolzenem Zustand zumindest teilweise aus dem Vorrichtungskörper (14) austritt, was die Freigabe der Absperrvorrichtung zur Folge hat.

10. Vorrichtung nach einem der Ansprüche 7 bis 9, wobei der Abstandshalter (12) in dem Sitz (32) des Schafts (24) der Halteschraube (16) mit Spiel aufgenommen ist, um einen Austrittskanal für den zumindest teilweisen Austritt des wärmeempfindlichen Elements (13) im geschmolzenem Zustand aus dem Schaft (24) der Schraube zu erlauben, was die Freigabe der Absperrvorrichtung zur Folge hat.

11. Vorrichtung nach einem der vorhergehenden Ansprüche, wobei zumindest ein Ausgangsloch (5) und die Eingangsleitung (9) jeweilige Lochachsen haben, die zueinander orthogonal sind.

12. Vorrichtung nach einem der vorhergehenden Ansprüche, wobei die Achse der Eingangsleitung (9) koaxial zur Längsachse (X) der Innenkammer (10) ist.

13. Vorrichtung nach einem der Ansprüche 4 bis 12, wobei der Verschlusskolben (7) einen Kopfabschnitt (19), der zur Eingangsleitung (9) zu dessen Verschluss in Eingriff steht, einen Schwanzabschnitt (20), der mit der Innenkammer (10) verschiebbar in Eingriff steht, sowie einen Zwischenabschnitt (28), dessen Querschnitt kleiner als jener des Schwanzabschnitts (20) ist, aufweist, wobei zumindest ein Ausgangsloch (5), das in der Wand des Vorrichtungskörpers (14) hergestellt ist, den Zwischenabschnitt (28) des Verschlusses umgibt.

14. Vorrichtung nach Anspruch 13, wobei der Abschnitt der Innenkammer (10), der an der Vorderseite durch den Schwanzabschnitt (20) des Verschlusskolbens (7) definiert ist, durch ein Lüftungsloch (6) mit der Atmosphäre in Verbindung steht.

15. Vorrichtung nach einem der vorhergehenden Ansprüche, wobei der Vorrichtungskörper (14) einen ersten Abschnitt (14'), der in dem Körper eines Ventils für Gasflaschen für den Eigenantrieb hergestellt ist, sowie einen zweiten Abschnitt (14''), der mit dem ersten Abschnitt abnehmbar verbunden ist, aufweist.

16. Vorrichtung nach dem vorhergehenden Anspruch, wobei die zwei Abschnitte (14', 14'') des Vorrichtungskörpers (14) gemeinsam die Innenkammer (10) definieren.

17. Vorrichtung nach einem der vorhergehenden Ansprüche, wobei die Halteschraube (16) einen Schraubenkopf (21) aufweist, der mit dem Schaft (24) mittels eines Verbindungsabschnitts (34) reduzierter Dicke verbunden ist, so dass er von dem Schaft leicht lösbar ist, sobald die Schraube hineingeschraubt worden ist, wobei der kopflose Schaft nicht von dem Gewindeloch (50) vorsteht, in das er geschraubt ist.

## Revendications

1. Dispositif de sûreté (1) pour un réservoir de gaz sous pression, en particulier pour des bouteilles de gaz à autopropulsion, comprenant :
- un corps de dispositif (14) qui définit une chambre interne (10) pour une communication fluidique avec ledit réservoir de gaz par le biais d'une conduite d'entrée (9) et avec l'atmosphère par le biais d'au moins un trou de sortie (5) ;
- un dispositif d'arrêt (7) logé au moins partiellement dans ladite chambre interne (10) et mobile entre une position fermée, dans laquelle il empêche le flux de gaz de la conduite d'entrée (9) vers le trou de sortie (5), et une position ouverte, dans laquelle il permet le flux de gaz de la conduite d'entrée (9) vers le trou de sortie (5) ;
- des moyens de retenue (11) associés audit dispositif d'arrêt et mobiles entre une position active bloquant le dispositif d'arrêt dans la position fermée, et une position inactive libérant ledit dispositif d'arrêt pour son mouvement vers la position ouverte ;
- au moins une élément thermosensible solide (13) interagissant avec lesdits moyens de retenue pour les maintenir normalement dans ladite position de blocage active et apte à fondre à une température prédéfinie pour permettre le déplacement des moyens de retenue dans ladite position de libération inactive ;
ledit dispositif de sûreté (1) étant **caractérisé en ce que** l'élément thermosensible solide (13) est logé dans une assise respective (32) réalisée dans la tige (24) d'une vis de retenue (16) vissée dans un trou fileté (50) réalisé dans une paroi du corps de dispositif (14) définissant la chambre interne (10), l'élément thermosensible (13) étant logé complètement à l'intérieur de ladite paroi du corps de dispositif (14) lui-même.

2. Dispositif selon la revendication 1, dans lequel l'épaisseur des parois de la tige (24) de la vis (16) qui définit l'assise (32) de l'élément thermosensible (13) est de nature à maintenir l'élément thermosensible à une distance de 0,5 à 2 mm de l'environnement extérieur.

3. Dispositif selon la revendication 1 ou 2, dans lequel chaque élément thermosensible (13) pèse de 0,01 g à 1 g.

4. Dispositif selon l'une quelconque des revendications précédentes, dans lequel la chambre interne (10) s'étend principalement le long d'un axe longitudinal (X) et dans lequel le dispositif d'arrêt est un obturateur à piston (7) mobile axialement le long dudit axe longitudinal entre la position fermée et la position ouverte.

5. Dispositif selon la revendication 4, dans lequel les moyens de retenue sont mobiles radialement par rapport à ladite direction axiale.

6. Dispositif selon l'une quelconque des revendications précédentes, dans lequel les moyens de retenue comprennent une bille de retenue (11) adaptée pour se mettre en prise dans un évidement (22) réalisé dans le dispositif d'arrêt.

7. Dispositif selon la revendication 6, dans lequel ladite bille de retenue (11) est normalement maintenue dans la position en prise active dans l'évidement (22) par un élément d'espacement (12) logé dans l'assise (32) de la tige (24) de la vis de retenue (16) et reposant sur l'élément thermosensible (13).

8. Dispositif selon l'une quelconque des revendications précédentes, dans lequel le dispositif d'arrêt est en laiton ou acier ou aluminium, ou une combinaison desdits matériaux dans n'importe quel pourcentage.

9. Dispositif selon l'une quelconque des revendications précédentes, dans lequel au moins trou d'expulsion (23) est réalisé dans la tige (24) de la vis de retenue (16), ce qui place l'assise (32) de l'élément thermosensible (13) en communication avec l'extérieur pour permettre audit élément thermosensible à l'état fondu d'être au moins partiellement expulsé à l'extérieur du corps de dispositif (14), provoquant la libération du dispositif d'arrêt.

10. Dispositif selon l'une quelconque des revendications 7 à 9, dans lequel l'élément d'espacement (12) est logé dans l'assise (32), dans la tige (24) de la vis de retenue (16) avec un jeu, de sorte à laisser un passage d'expulsion pour l'au moins une sortie partielle de l'élément thermosensible (13) à l'état fondu de la tige (24) de la vis, provoquant la libération du dispositif d'arrêt.

11. Dispositif selon l'une quelconque des revendications précédentes, dans lequel au moins un trou de sortie (5) et la conduite d'entrée (9) ont des axes de trous respectifs orthogonaux les uns par rapport aux autres.

12. Dispositif selon l'une quelconque des revendications précédentes, dans lequel l'axe de la conduite d'entrée (9) est coaxial à l'axe longitudinal (X) de la chambre interne (10).

13. Dispositif selon l'une quelconque des revendications 4 à 12, dans lequel l'obturateur à piston (7) comprend une partie de tête (19) qui se met en prise avec la conduite d'entrée (9) de sorte à la sceller, une partie de queue (20) qui se met en prise avec la chambre interne (10) de sorte à coulisser, et une partie intermédiaire (28) ayant une section transversale plus petite que celle de la partie de queue (20), l'au moins un trou de sortie (5) étant réalisé dans la paroi du corps de dispositif (14) entourant ladite partie intermédiaire (28) de l'obturateur.

14. Dispositif selon la revendication 13, dans lequel la partie de la chambre interne (10) définie à l'avant par la partie de queue (20) de l'obturateur à piston (7) communique avec l'atmosphère par le biais d'un orifice d'aération (6).

15. Dispositif selon l'une quelconque des revendications précédentes, dans lequel le corps de dispositif (14) comprend une première partie (14') réalisée dans le corps d'une soupape pour bouteilles de gaz pour l'autopropulsion et une seconde partie (14'') reliée de manière détachable à ladite première partie.

16. Dispositif selon la revendication précédente, dans lequel lesdites deux parties (14', 14'') du corps de dispositif (14) définissent conjointement la chambre interne (10).

17. Dispositif selon l'une quelconque des revendications précédentes, dans lequel la vis de retenue (16) a une tête de vis (21) reliée à la tige (24) au moyen d'une partie de liaison (34) d'épaisseur réduite, de sorte à pouvoir être détachée facilement de la tige une fois que la vis a été vissée, la tige sans tête ne faisant pas saillie du trou fileté (50) dans lequel elle est vissée.
